# EUROPEAN PATENT SPECIFICATION

(11) **EP 0 930 387 B1**
(45) Date of publication and mention of the grant of the patent: **28.08.2002**
(21) Application number: 98123478.4
(22) Date of filing: 11.12.1998
(51) Int. Cl.: D03D 51/00, F16H 37/06, F16H 1/22

(54) **Improved mechanism to select the slow running condition and find the pick in looms**
Mechanismus zur Auswahl des Langsamlaufes und zum Schusssuchen in Webmaschinen
Mécanisme pour sélectionner la marche lente et pour retrouver la trame dans les métiers à tisser

(30) Priority: 23.12.1997 IT MI972860
(43) Date of publication of application: 21.07.1999
(73) Proprietor: Promatech S.p.A., 24020 Colzate (Bergamo) (IT)
(72) Inventor: Casarotto, Giuseppe, 24122 Bergamo (IT); Gallizioli, Angelo, 24026 Leffe, Bergamo (IT)
(74) Representative: Faggioni, Carlo Maria, Dr. Ing.

(56) References cited:
- EP-A- 0 161 012
- EP-A- 0 322 928
- EP-A- 0 882 824
- FR-A- 2 492 421
- NL-A- 9 001 299

## Description

The present invention concerns an improved mechanism to select the slow running condition and find the pick in looms. In particular, it concerns a mechanism to set the connection, alternatively or simultaneously, between the main shaft of the loom, the shaft of the weave machine and the slow running control of said loom.

As known, the main shaft of a loom controls, among other things, also the weave machine (dobby, jacquard or cam machine) working with said loom. In the event that, for any reason (for instance, breaking of a warp yarn, faulty weft yarn insertion, and so on), it may be required to stop the working of the loom, it is indispensable to subsequently be able to carry out some loom picks in slow running conditions, eventually going in reverse, so as to locate the fault or inconvenience, and then start again in steady running conditions without leaving defects in the fabric.

To work in slow running conditions, the loom is equipped with an auxiliary motor which acts, through an appropriate kinematic chain with high reduction ratio, on the shaft of the weave machine and/or on the main shaft of the loom.

The auxiliary motor should however be able to act only in slow running conditions and then be excluded during the steady running conditions of the loom. For this purpose, a slow running clutch is provided to connect the auxiliary motor with the weave machine, and/or with the main shaft of the loom, only when the slow running conditions are set.

In most cases moreover, the stopping, maintenance and restarting of the loom require the motion of the weave machine to be independent from that of the loom main shaft: for example, when a faulty weft insertion occurs, it should be possible to cause the weave machine to perform an appropriate motion, keeping the main shaft idle, so as to open the shed and pull out the faulty weft yarn, without a new weft yarn being inserted by the weft insertion device controlled by the main shaft of the loom.

To make the two movements independent, the main shaft of the loom and the shaft of the weave machine are connected through a main coupling clutch. Said clutch should not only set or exclude the connection, but should also guarantee for the connection to be univocally determined, namely for the phase angle between the two shafts to be always corresponding to that planned, so that the loom cycle may be constantly repeated to answer the requirements of the fabric pattern. According to known technique this is obtained in different ways, one of the most common ways being to adopt a pin, fixed onto one of the two half-clutches and engaging into a seat therefor formed into the other half-clutch.

The step wherein - with the loom in slow running conditions - the pin is moved up to being brought in correspondence of its seat, is called "pick finding" step, and this is how it will be indicated hereinafter.

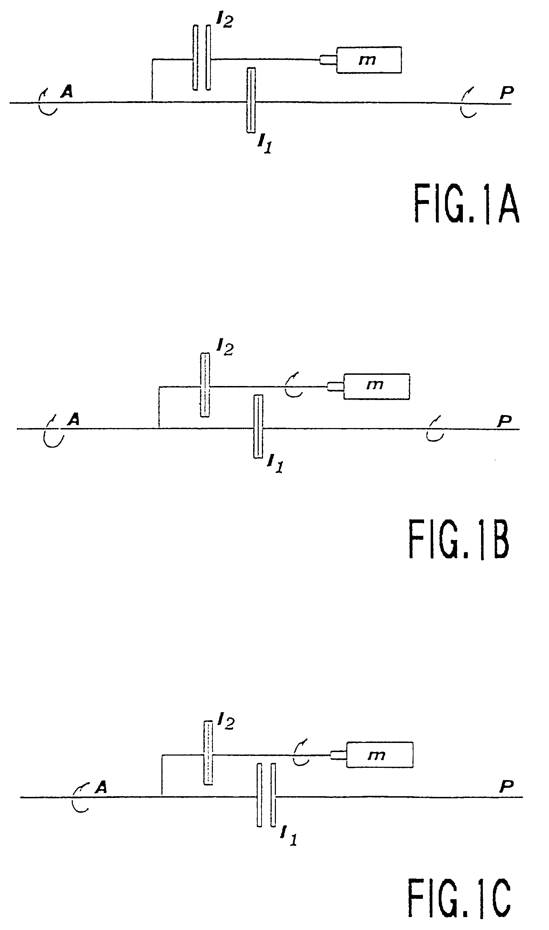

It can be seen from the above that a double requirement arises in modern looms: one is to connect, in a disengageable manner, the slow running motor with the weave machine and/or with the main shaft of the loom, while the other one is to be able to temporarily disconnect said main shaft from the weave machine, and subsequently reset the connection according to a desired phase angle. This is normally obtained by means of a double clutch system - one clutch to connect the main shaft of the loom with the shaft of the weave machine, and the other clutch to connect the auxiliary motor with the weave machine - with three fundamental operating conditions (shown in figs. 1A, 1B and 1C of the accompanying drawings):
- steady running conditions: main clutch I₁ engaged, and slow running clutch I₂ disengaged (fig. 1A);
- slow running conditions of the whole loom: both clutches I₁ and I₂ engaged (fig. 1B);
- slow running conditions of the weave machine A and loom main shaft P in idle conditions (for example, pick finding step): main clutch I₁ disengaged, and slow running clutch I₂ engaged (fig. 1C).

Mechanisms of this type are known in technique, and have different and more or less complicated structures.

One of such mechanisms is disclosed in EP-B1-322.928, filed by BARUFFALDI S.p.A.. In this patent, the double clutch substantially consists of two distinct plane bevel gears (i.e. bevel gears developing on a plane), mounted as a sandwich and moved, so as to mesh, axially one against the other, according to appropriate working schemes. The main shaft of the loom and the shaft of the weave machine are coaxial and face each other with one of their ends. Onto the end of the loom main shaft there is fixed a rotor carrying, by way of a flat spring, a first plate having a plane bevel toothing. Said first plate is apt to axially translate in respect of its rotor, under the opposing action of a combination of flat and thrust springs, and of an electromagnet fixed onto an external box, which develops a magnetic field through the rotor, such as to attract the toothed plate. The thrust springs are apt to press the first toothed plate against a second rotor with plane bevel toothing fixed at the opposite end of the shaft of the weave machine, thereby ensuring the engagement of the main clutch. A pin coupling system is moreover provided between the second rotor and the first translatable plate, said system allowing an univocal mesh between the plate and the second rotor. On the rear surface of the second rotor there is fixed a second translatable plate with plane bevel toothing, apt to mesh - again under the opposing action of springs and of an electromagnet - with a slow running plane bevel gear, coaxial to the two rotors but idle in respect thereof. This last gear comprises, over its circumference, a toothing apt to mesh with a worm screw operated by an auxiliary motor. Hence, the meshing between the second plate and the slow running plane bevel gear represents the slow running clutch.

This solution, though widely spread, however involves a series of drawbacks.

To start with, the mechanism as well as the operating system are positively complex, costly and delicate. In particular, the use of translatable plates, interposed between the rotors, requires to adopt electromagnetic actuators apt to act thereon, thanks to the magnetic field, even through the thickness of the actual rotating gears. However, the use of electromagnets does not allow to perform translation strokes exceeding 1ö2 mm, and this makes it indispensable to adopt gears with a plane bevel toothing, which have a very short meshing stroke but which, on the other hand, involve a great number of drawbacks, such as:
- being more costly than the common spur gears;
- not being apt to provide any reduction ratio: this task is hence fully entrusted to another kinematic chain, separate from the clutch system; this, besides requiring a higher number of components, forces to adopt kinematic mechanisms with a high reduction ratio, such as worm and pinion gears, having a low efficiency;
- being rather critical in transmitting a torque, as the teeth profiles impart on the gear an axial thrust, which is inclined to disengage the clutch when they undergo a tangential stress deriving from the application of a torque; consequently, the gears should be kept pressed one against the other with a strong opposing action imparted by preloaded springs; this inevitably introduces design limits.

A mechanism, apt to overcome the aforementioned drawbacks, has more recently been conceived by the Applicant, said mechanism being disclosed in the European Patent Application N. 98110018.3, filed on 2nd June 1998.

This solution - like the previous one - is again based on two separate clutches, though it eliminates the difficulties connected with plane bevel gears. The requirement still arises, however, to use at least two actuators to control, separately, the engagement and the disengagement of the two clutches.

This last solution thus again involves a somewhat complex structure and difficulty of operation, which do not make it fully satisfactory.

The object of the present invention is to overcome all the aforecited drawbacks. In particular, it is meant to supply an improved mechanism allowing to set and exclude the connection between the main shaft of the loom and the shaft of the weave machine, and between the shaft of the weave machine and an auxiliary slow running motor, by means of a double clutch which is simple, stout and economic, which may exclusively make use of spur gears and which can be controlled by a single actuator.

Said objects are reached, according to claim 1, with an improved mechanism to select the slow running condition and find the pick in looms - of the type comprising a main gearwheel apt to receive and transmit the motion from and to the main shaft of the loom, a driven gear apt to transmit the motion to the weave machine, and a slow running gear apt to transmit the motion from an auxiliary slow running motor - which also comprises a single coupling gearwheel apt to perform an axial translation so as to determine the simultaneous mesh between said main gearwheel, said driven gear and said slow running gear, or alternatively, between the main gearwheel and the driven gear, or between the driven gear and the slow running gear.

Further characteristics and advantages of the mechanism according to the present invention will anyhow be more evident from the following detailed description of some preferred embodiments thereof, given by way of example and illustrated on the accompanying drawings, in which:
Figs. 1A, 1B and 1C are diagrammatic views showing the different possibilities of operation of the mechanism to select the slow running condition and find the pick in looms (already indicated heretofore);
Fig. 2 is a diagrammatic side elevation view of a first embodiment of the mechanism according to the invention, with the loom in steady running conditions;
Fig. 3 is a view of the mechanism shown in fig. 2, with the loom and the weave machine in slow running conditions;
Fig. 4 is a view of the mechanism of fig. 2, showing the pick finding step;
Fig. 5 is a view of the mechanism of fig. 2, showing the adjustment step of a new phase angle between the loom and the weave machine;
Fig. 6 is a view similar to that of fig. 2, showing another embodiment of the mechanism according to the invention.
Fig. 7 is a view similar to that of fig. 2, showing a further embodiment of the mechanism according to the invention;
Fig. 8 is a view of the mechanism shown in fig. 7, with the loom and the weave machine in slow running conditions;
Fig. 9 is a view of the mechanism of fig. 7, showing the pick finding step; and
Fig. 10 is a view similar to that of fig. 2, showing a still further embodiment of the mechanism according to the invention.

As already said with reference to figs. 1A to 1C, the mechanism to select the slow running condition and find the pick in looms substantially comprises a double clutch, wherein a first main clutch I₁ connects the main shaft P of the loom with the shaft of the weave machine A, and a second slow running clutch I₂ connects an auxiliary motor m to the shaft of the weave machine A and/or to the main shaft P of the loom.

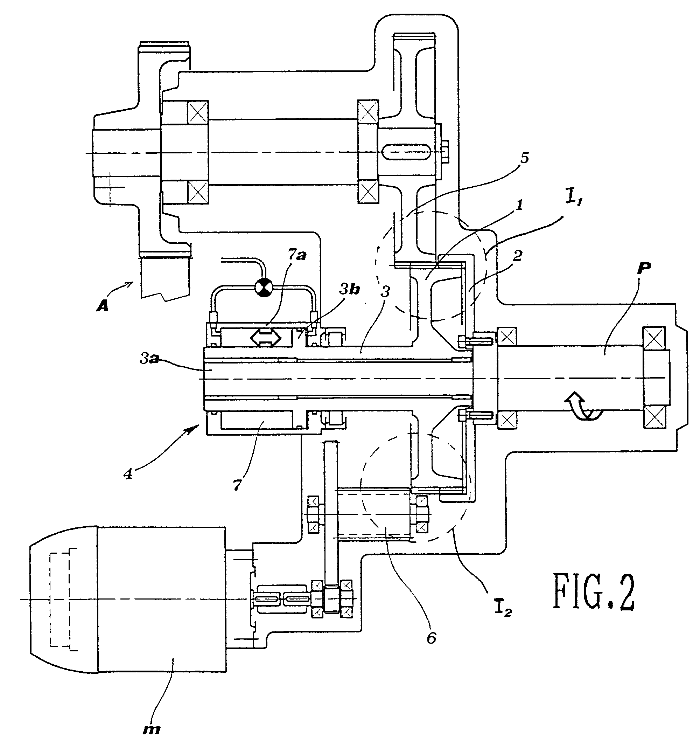

According to the invention - as shown in fig. 2 - the double clutch comprises a main clutch section I₁ and a slow running clutch section I₂.

The main clutch section I₁ comprises a coupling gearwheel 1 and a main gearwheel 2, mounted coaxial and meshing frontwise through a spur toothing, as well as a third driven gear 5, positioned laterally in respect of the gearwheels 1 and 2, and transmitting the motion to the weave machine A.

The main gearwheel 2 is fixed onto the main shaft P of the loom, or onto a shaft receiving the motion from this latter.

The coupling gearwheel 1 is fixed onto a hub 3, apt to perform an axial translation along a support shaft 3a by way of a suitable actuator 4.

Consequently, the engagement between the gearwheels 1 and 2 can be determined and excluded through the actuator 4, by shifting forward and backward the coupling gearwheel 1 in the manner explained hereinafter. Also the driven gear 5 is apt to engage with the coupling gearwheel 1. The length of the toothings of the gearwheels 1 and 5 is such that they keep in constant mesh through all the positions taken up by the gearwheel 1, except in a particular operating condition which shall be described hereinafter.

The slow running clutch section I₂ also comprises the coupling gearwheel 1, and a slow running gear 6 apt to transmit the motion from an auxiliary slow running motor m. As can be understood, with reference to the drawings, also the slow running clutch section I₂ can be operated by merely shifting the coupling gearwheel 1 by way of the actuator 4.

According to a preferred embodiment of the invention, the actuator 4 consists of a cylinder/piston unit connected with the hub 3 of the coupling gearwheel 1. More precisely, a cylinder 7a coaxial to the hub 3 defines a pressure chamber 7 surrounding said hub. A circular flange 3b, provided inside the chamber 7, radially projects from the hub 3 and, through gaskets forming a seal against the inner surface of the cylinder 7a, it acts as a piston.

A fluid, such as air or oil, fed under pressure into the chamber 7 - preferably on either sides of the circular flange 3b, so as to realize a double-acting piston - determines a pressure onto the piston flange, which causes the required axial translation of the hub 3 along the shaft 3a, and thus the translation of the coupling gearwheel 1.

The actuator 4 can take up different configurations, provided that it ensures the required movement of the coupling gearwheel 1, as described hereinafter with reference to the working of the mechanism according to the present invention.

In steady running conditions of the loom (fig. 2), the coupling gearwheel 1 is in its fully forward position apt to ensure the engagement between the gearwheel 2 of the loom main shaft P, and the driven gear 5 transmitting the motion to the weave machine A. In this condition, the slow running gear 6 is not meshing with the coupling gearwheel 1.

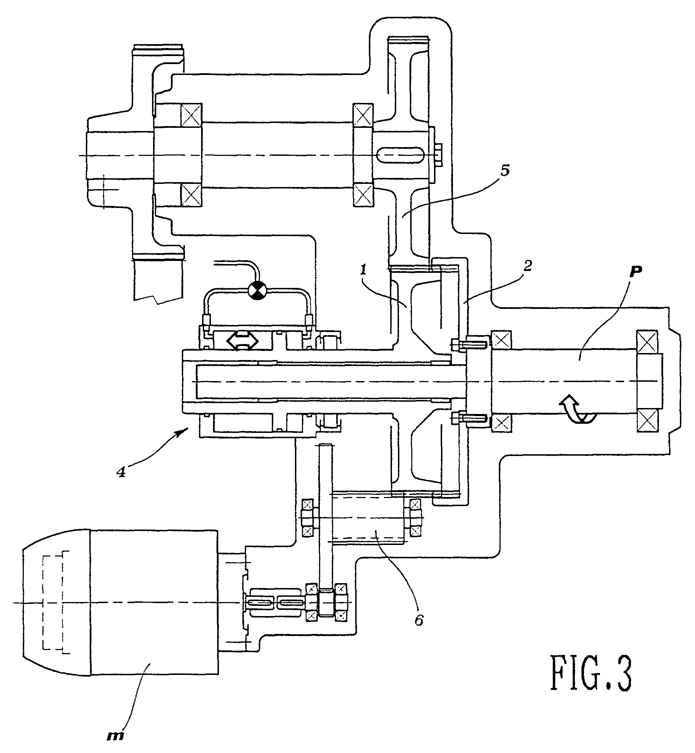

In slow running conditions of the loom (fig. 3), and of the weave machine A - when the motion is ensured by the auxiliary motor m - the coupling gearwheel 1 is moved, through the suitably controlled actuator 4, into an intermediate position in which it simultaneously meshes with the main gearwheel 2, with the driven gear 5, and with the slow running gear 6 of the auxiliary motor m. This allows to bind the movements of all these members, which are thus moved at a reduced speed by the auxiliary motor m.

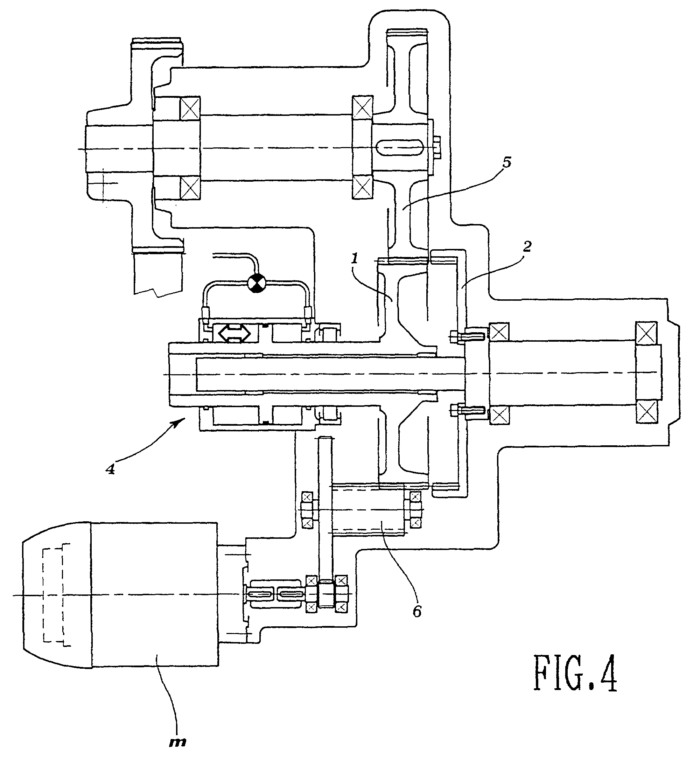

When having instead to operate only the weave machine A, for example in the pick finding step (fig. 4), the coupling gearwheel 1 is moved backward into a position in which it disengages from the main gearwheel 2, but keeps meshing with the slow running gear 6 and with the driven gear 5.

Since, in this last step, the coupling gearwheel 1 is temporarily disengaged from the main gearwheel 2, this latter is idle in respect of the driven gear 5 which is still meshing with the coupling gearwheel 1. The possibility of relative rotation, between the main gearwheel 2 and the driven gear 5, allows a different phase angle to be set between said gears, and thus between the weaving members, fixed to the loom main shaft P, and the weave machine A. To avoid, when the coupling gearwheel 1 subsequently meshes with the main gearwheel 2, setting a different phase angle from that planned, which enables the loom to work correctly, any means can be provided to keep the correct phase angle - for instance an axial check pin fitting into a hole, or other electronic type means - apt to guarantee an univocal mesh between the coupling gearwheel 1 and the main gearwheel 2.

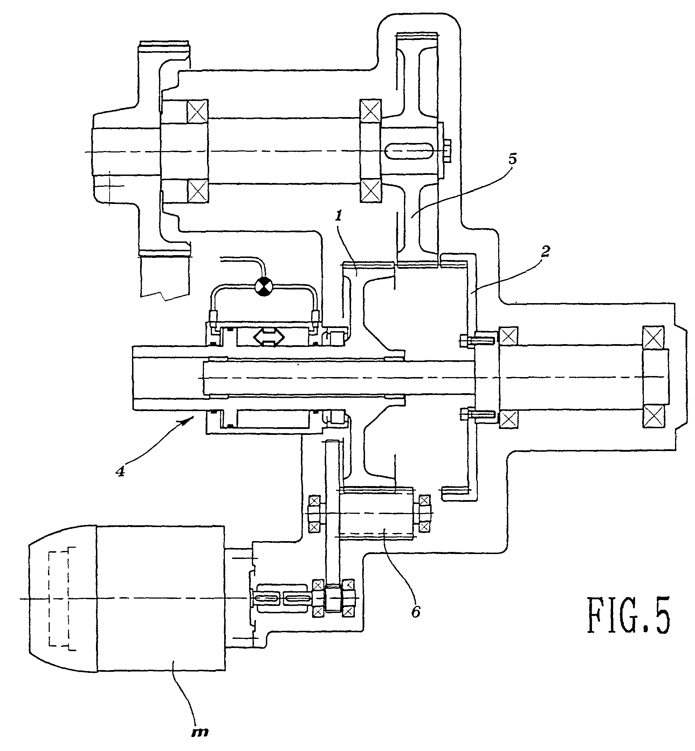

Likewise, to allow setting a different phase angle between the main gearwheel 2 and the driven gear 5, in those cases in which it may be required (for example to adjust the phase angle to the type of fabric being woven), according to a preferred embodiment of the invention (fig. 5) the coupling gearwheel 1 can be moved into a further special working position - namely into a fully setback end-of-stroke position - in which it disengages both from the main gearwheel 2 and from the driven gear 5. Thus, the driven gear 5 can be caused to rotate in respect of the coupling gearwheel 1, then resetting the subsequent engagement with a different phase angle, which will simultaneously be maintained also with the main gearwheel 2 since this latter, as said above, is in constant univocal mesh with the coupling gearwheel 1.

Advantageously, two encoders (not shown) are provided, to respectively read the angular position of the gearwheels 2 and 5, so as to adjust the phase angle required for the engagement between the same.

The adjustment of the different working positions of the actuator 4 can be easily obtained with the most different electronic systems; for instance, by detecting with a proximity sensor the position taken up by the coupling gearwheel 1, it is possible to set the working positions of the actuator 4.

Preferably, the auxiliary motor m is a variable speed motor having at least two speeds. This allows to adopt a minimum speed in the critical slow running steps (for example, during insertion of the check pin into its hole), and a higher speed in the other slow running steps, thereby reducing even further the overall dead times of loom operation.

The speed change of the auxiliary motor m can be obtained, for example, by changing the three-phase current supply from star to delta (two speeds), or else by varying the frequency of the supply current.

It has thus been possible to accomplish a mechanism to select the slow running condition and find the pick in looms, which fully achieves the intended objects; in particular, said mechanism is very simple and economic, and it comprises a single actuator. The mechanism according to the present invention advantageously allows both to maintain a specific phase angle between the loom main shaft P and the weave machine A, and to change the phase angle and reset a different phase angle between said members, always using the same actuator 4.

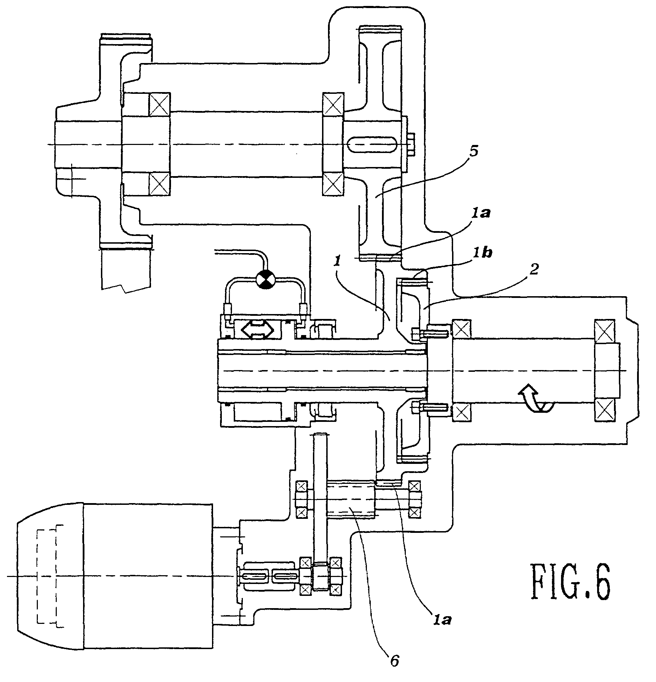

In another embodiment of the present invention, the main gearwheel 2 has an external toothing (fig. 6); accordingly, the coupling gearwheel 1 comprises a portion 1a having an external toothing, so as to mesh with the driven gear 5, and a portion 1b having an internal toothing, so as to mesh with the main gearwheel 2. It is however understood that also other combinations can be adopted, without thereby departing from the teachings supplied herein and without modifying, in the substance, the working of the mechanism according to the present invention.

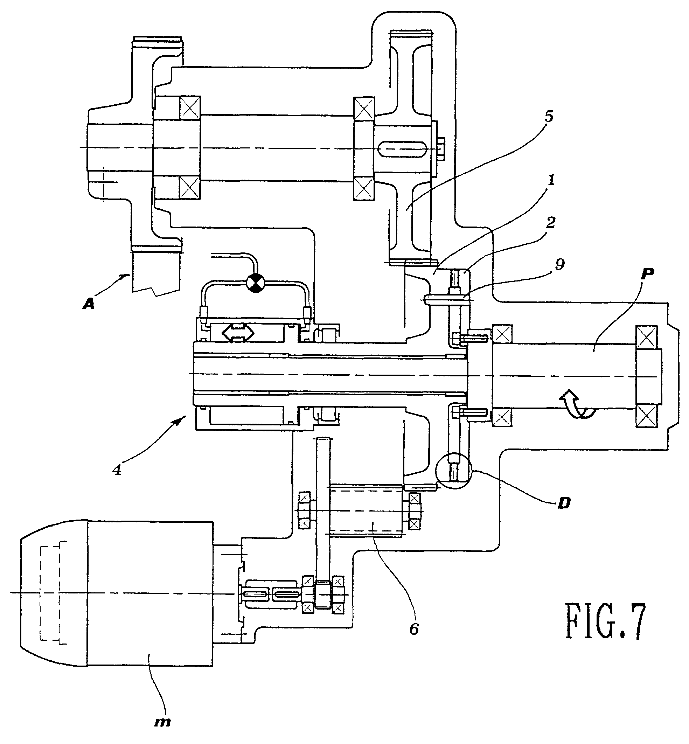

For example, figs. 7 to 9 illustrate a further embodiment of the mechanism according to the invention, wherein the main gearwheel 2 and the coupling gearwheel 1 have a plane bevel toothing D. The use of plane bevel gears for the engagement between the gearwheels 1 and 2 - apart from the inconveniences reported in the introductory part - provides the advantage of practically eliminating the slacks between the gears, which are instead present in the frontal mesh between spur gears, thereby preventing troublesome impacts between the gears during the torque conversions applied on the gearwheels.

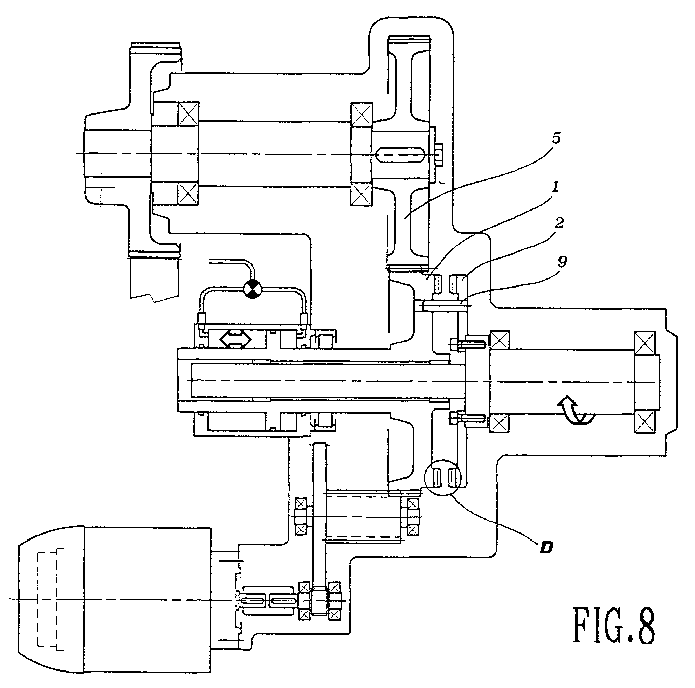

Furthermore, plane bevel gears allow a very short meshing stroke. However, this also leads to a very short disengagement stroke; it is thus necessary to provide for an element apt to keep the gearwheels 1 and 2 engaged during the slow running step (fig. 8), in which the coupling gearwheel 1 is moved into an intermediate position so as to simultaneously mesh with the slow running gear 6.

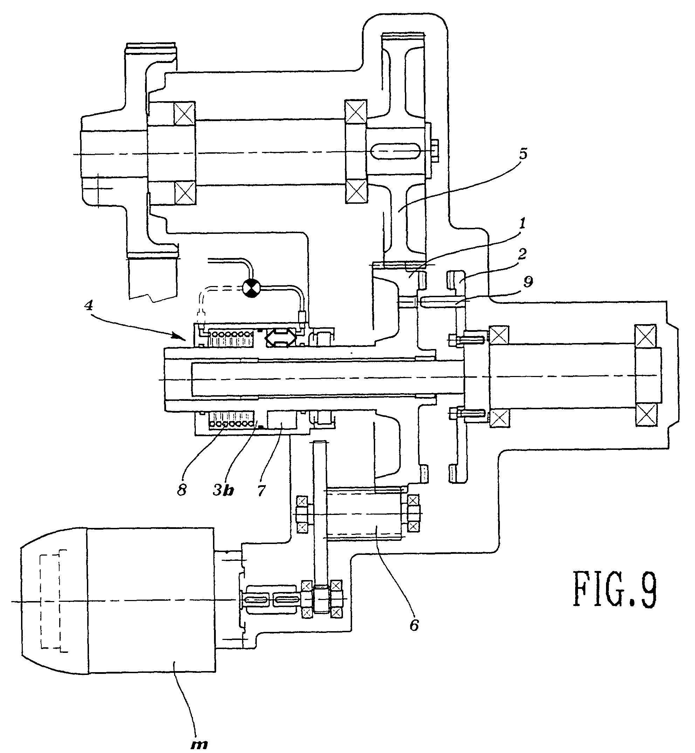

For this purpose, the mechanism can be provided with one or more pins 9 which allow, at the same time, to draw the main gearwheel 2 while the auxiliary motor m is working (fig. 8), and to ensure the univocal mesh between the gearwheels 1 and 2, after their full disengagement in the pick finding step (fig. 9).

Moreover since, in steady running conditions of the loom, the application of a torque on the two plane bevel gears produces thereon an axial thrust which tends to part said gears, it is necessary to use a pressure element apt to keep the coupling gearwheel 1 in engagement with the main gearwheel 2.

For this purpose, it is possible to use the same double-acting actuator 4, or else to provide for an elastic element such as a helical spring 8 (fig. 9) acting in support of the actuator 4 and apt to impart a thrust on the coupling gearwheel 1 even when there is no pressure inside the actuator, for example in steady running conditions of the loom. If a spring element is adopted the actuator 4 can also be of the single-acting type, with evident advantages as far as costs and reliability.

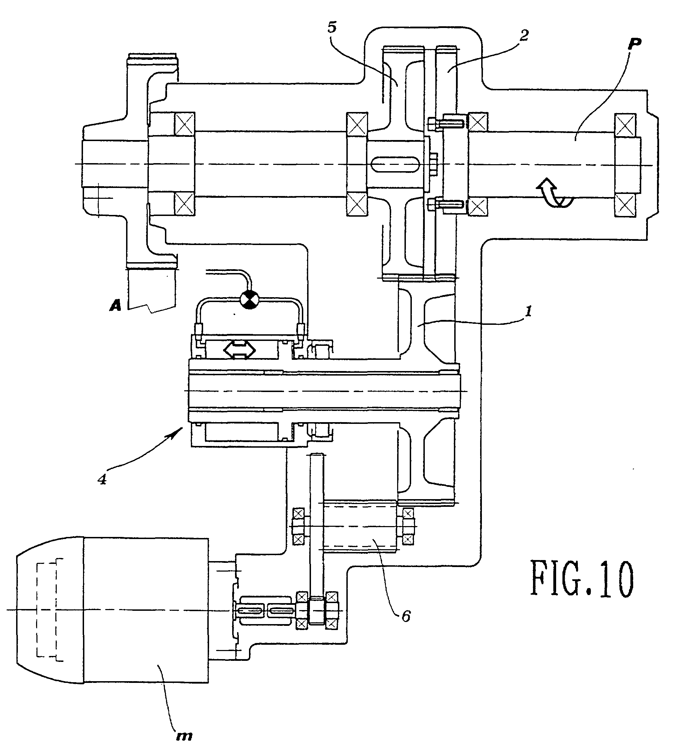

Finally, in a still further particularly advantageous embodiment of the mechanism according to the invention (fig. 10), the main gearwheel 2 and the driven gear 5 are meant to mesh on the same side of the coupling gearwheel 1. The gearwheels 2 and 5 can be suitably mounted on coaxial shafts.

In this way, the whole slow running clutch unit - formed by the coupling gearwheel 1, the slow running gear 6, the actuator 4, and the auxiliary motor m with its transmission system - may be conceived as a separate unit, which can be very easily applied to the loom structure by being mounted next to the two gearwheels 2 and 5. This last solution turns out to be very "neat" from the mechanical point of view, and allows an easy access for all the maintenance operations and for the replacement of any mechanical components of the loom and/or of the clutch unit.

It is anyhow understood that the invention is not limited to the particular embodiments described heretofore, which merely form non-limiting examples of its scope, but that many modifications can be introduced, all within reach of a technician skilled in the art, without thereby departing from the protection field of the present invention.

For example, the coupling gearwheel 1 shown on the drawings is all in one piece, but it could be formed by two separate gearwheels, keyed onto the same hub 3, which may be of a more standard shape though still performing the same functions.

Moreover, the auxiliary motor m, or the kinematic chain connected thereto, should be preferably provided with a brake (not shown) apt to oppose the torque applied by the weave machine A. The load of the weave machine is in fact variable in time and, in special cases (jacquard, negative dobby), it is even negative due to the presence of return springs. In this last case, an accelerating torque is applied on the auxiliary motor in the pick finding step, and this creates problems for the precision of the clutch. The presence of a brake, apt to control the rotation of the slow running gear 6, thus proves to be advantageous.

Finally, while keeping the actuator 4 substantially with the same structure described heretofore, it is possible to divide the hub 3 in two sections, so that only one section may be caused to rotate together with the coupling gearwheel 1, while the other section of the hub 3 fixed to the actuator 4 remains static, so as not to create any problems of creeping seals.

The wide possibility of choice for the actuators of the mechanism of the present invention also contemplates, according to another embodiment, the use of an electromagnetic actuator, or of a fork actuator of the type commonly used for gearshifts of gearboxes in motorvehicles. This last solution, though more bulky, would eliminate any possible problems deriving from the use of creeping seals for the pressure chamber 7.

## Claims

1. Mechanism to select the slow running condition and find the pick in looms - of the type comprising a main gearwheel (2) apt to receive and transmit the motion from and to the main shaft (P) of the loom, a driven gear (5) apt to transmit the motion to the weave machine (A), and a slow running gear (6) apt to transmit the motion from an auxiliary slow running motor (m) - **characterized in that** it also comprises a single coupling gearwheel (1), apt to perform an axial translation by which only it is determined the simultaneous mesh between said main gearwheel (2), said driven gear (5) and said slow running gear (6), or alternatively, between the main gearwheel (2) and the driven gear (5), or between the driven gear (5) and the slow running gear (6).

2. Mechanism as in claim 1), wherein said main gearwheel (2), said driven gear (5) and said slow running gear (6) are fixed in an axial position, while said coupling gearwheel (1) is fixed onto a hub (3) apt to perform an axial translation along a support shaft (3a) bu way of an actuator (4).

3. Mechanism as in claim 1) or 2), wherein said main gearwheel (2) is mounted coaxial to said coupling gearwheel (1), while said driven gear (5) is positioned laterally in respect thereof.

4. Mechanism as in claim 3), wherein said coupling gearwheel (1) comprises a first portion with a spur toothing apt to mesh with a corresponding toothing of the main gearwheel (2), and a second portion with a spur toothing apt to mesh with a corresponding toothing of the driven gear (5).

5. Mechanism as in claim 3), wherein said coupling gearwheel (1) comprises a first portion with a plane bevel toothing apt to mesh with a corresponding toothing of the main geawheel (2), and a second portion with a spur toothing apt to mesh with a corresponding toothing of the driven gear (5).

6. Mechanism as in claim 2), wherein said main gearwheel (2) and said driven gear (5) are both positioned on the same side as the coupling gearwheel (1).

7. Mechanism as in any one of the previous claims, comprising moreover means to keep a correct phase angle between the main gearwheel (2) and the coupling gearwheel (1).

8. Mechanism as in claim 7), wherein said means to keep a correct phase angle consist of an axial pin, fixed to said main gearwheel (2) or to said coupling gearwheel (1), and of a corresponding hole provided in the other of the two elements.

9. Mechanism as in any one of claims 2) to 8), wherein said actuator (4) consists of a cylinder/piston unit, in which the piston is a circular flange (3b) radially projecting from the hub (3) of the coupling gearwheel (1), and the cylinder is formed by the cylindrical walls (7a) of a pressure chamber (7), which have a diameter complementary to that of the flange (3b) and are coaxial to said hub (3).

10. Mechanism as in claim 9), wherein said cylinder/piston unit acts in opposition to thrust springs (8).

11. Mechanism as in claim 9) or 10), wherein said actuator (4) is a double-acting actuator.

12. Mechanism as in any one of claims 2) to 8), wherein said actuator (4) is of the electromagnetic type.

13. Mechanism as in any one of the previous claims, wherein two encoders are provided to read the phase angle between the angular position of the main gearwheel (2) and the angular position of the driven gear 5.

14. Mechanism as in any one of the previous claims, wherein a brake is moreover provided to act on the auxiliary motor m, or onto a kinematic chain connected thereto.

15. Mechanism as in any one of the previous claims, wherein the auxiliary motor m is a variable speed motor.

## Patentansprüche

1. Mechanismus zur Auswahl des Langsamlaufes und zum Schusssuchen in Webmaschinen - von der Art mit einem Hauptzahnrad (2), das dazu eingerichtet ist, den Antrieb von und zu der Hauptwelle (P) der Webmaschine aufzunehmen und zu übertragen, einem angetriebenen Zahnrad (5), das eingerichtet ist zur Übertragung der Bewegung von der Webmaschine (A) und einem Langsamlaufzahnrad (6), das zur Übertragung des Antriebs von einem Hilfs-Langsamlaufmotor (m) eingerichtet ist - **dadurch gekennzeichnet, dass** es weiter ein einziges Kupplungszahnrad (1) aufweist, das dazu eingerichtet ist, eine axiale Translation auszuführen, durch die allein das gleichzeitige Kämmen zwischen dem Hauptzahnrad (2), dem angetriebenen Zahnrad (5) und dem Langsamlauf-Zahnrad (6) oder, alternativ, zwischen dem Hauptzahnrad (2) und dem angetriebenen Zahnrad (5) oder zwischen dem angetriebenen Zahnrad (5) und dem Langsamlauf-Zahnrad (6) auszuführen.

2. Mechanismus nach Anspruch 1, wobei das Hauptzahnrad (2), das angetriebene Zahnrad (5) und das Langsamlauf-Zahnrad (6) in einer axialen Position fixiert sind, während das Kupplungszahnrad (1) auf einer Nabe (3) fixiert ist, die dazu eingerichtet ist, eine axiale Translation entlang einer Stützwelle (3a) mittels eines Betätigungselements (4) auszuführen.

3. Mechanismus nach Anspruch 1 oder 2, wobei das Hauptzahnrad (3) koaxial mit dem Kupplungszahnrad (1) montiert ist, während das angetriebene Zahnrad (5) lateral in Bezug auf jenes positioniert ist.

4. Mechanismus nach Anspruch 3, wobei das Kupplungszahnrad (1) einen ersten Abschnitt mit einer Stirnverzahnung aufweist, die dazu eingerichtet ist, mit einer entsprechenden Zahnung in dem Hauptzahnrad (2) zu kämmen und einem zweiten Abschnitt mit einer Stirnverzahnung, die dazu eingerichtet ist, mit einer entsprechenden Zahnung des angetriebenen Zahnrads (5) zusammen zu wirken.

5. Mechanismus nach Anspruch 3, wobei das Kupplungszahnrad (1) einen ersten Abschnitt mit einer ebenen Schrägverzahnung aufweist, die dazu eingerichtet ist, mit einer entsprechenden Zahnung in dem Hauptzahnrad (2) zusammen zu wirken und einem zweiten Abschnitt mit einer Stirnverzahnung, die dazu eingerichtet ist, mit einer entsprechenden Verzahnung auf dem angetriebenen Zahnrad (5) zusammenzuwirken.

6. Mechanismus nach Anspruch 2, wobei das Hauptzahnrad (2) und das angetriebene Zahnrad (5) beide auf derselben Seite wie das Kupplungszahnrad (1) angeordnet sind.

7. Mechanismus nach einem der vorangehenden Ansprüche, weiter mit Mitteln zum Erhalten des richtigen Phasenwinkels zwischen dem Hauptzahnrad (2) und dem Kupplungszahnrad (1).

8. Mechanismus nach Anspruch 7, wobei das Mittel zum Erhalten des richtigen Phasenwinkels aus einem axialen Stift, der auf dem Hauptzahnrad (2) oder dem Kupplungszahnrad (2) befestigt ist, und aus einer entsprechenden Bohrung, die in dem anderen der beiden Elemente vorgesehen ist, besteht.

9. Mechanismus nach einem der vorangehenden Ansprüche 2 bis 8, wobei das Betätigungselement (4) aus einer Zylinder/Kolben-Einheit besteht, bei der der Kolben ein kreisförmiger Flansch (3b) ist, der radial von der Nabe (3) des Kupplungszahnrads (1) vorspringt und der Zylinder durch die zylindrischen Wandungen (7a) einer Druckkammer (7) gebildet ist, die einen Durchmesser hat, der zu dem des Flansches (3b) komplementär ist, und die koxial zu der Nabe (3) sind.

10. Mechanismus nach Anspruch 9, wobei die Zylinder/Kolben-Einheit gegen Druckfedern (8) wirkt.

11. Mechanismus nach Anspruch 9 oder 10, wobei das Betätigungselement (4) ein doppelt wirkendes Betätigungselement ist.

12. Mechanismus nach einem der Ansprüche 2 bis 8, wobei das Betätigungselement (4) vom elektromagnetischen Typ ist.

13. Mechanismus nach einem der vorangehenden Ansprüche, wobei zwei Decoder vorgesehen sind, um den Phasenwinkel zwischen der Winkelposition der Hauptwelle (2) und der Winkelposition des angetriebenen Zahnrads (5) zu lesen.

14. Mechanismus nach einem der vorangehenden Ansprüche, wobei weiter eine Bremse vorgesehen ist, die auf den Hilfsmotor (m) oder auf eine mit diesem verbundene kinematische Kette wirkt.

15. Mechanismus nach einem der vorangehenden Ansprüche, wobei der Hilfsmotor (m) ein Motor mit variabler Geschwindigkeit ist.

## Revendications

1. Mécanisme pour sélectionner la condition de marche lente et trouver la duite dans des métiers - du type comprenant un engrenage principal (2) adapté à recevoir et transmettre le mouvement depuis et jusqu'à l'arbre principal (P) du métier, une roue menée (5) adaptée à transmettre le mouvement à la machine à tisser (A), et un engrenage de marche lente (6) adapté à transmettre le mouvement depuis un moteur auxiliaire de marche lente (m) - **caractérisé en ce qu'**il comprend également un engrenage unique d'accouplement (1), adapté à avoir une translation axiale, par laquelle est seulement déterminé l'engrènement simultané entre ledit engrenage principal (2), ladite roue menée (5) et ledit engrenage de marche lente (6), ou, alternativement, entre l'engrenage principal (2) et la roue menée (5), ou entre la roue menée (5) et l'engrenage de marche lente (6).

2. Mécanisme selon la revendication 1, dans lequel ledit engrenage principal (2), ladite roue menée (5) et ledit engrenage de marche lente (6) sont fixes dans une position axiale, tandis que ledit engrenage d'accouplement (1) est fixé sur un moyeu (3) adapté à avoir une translation axiale le long d'un arbre de support (3a) au moyen d'un actionneur (4).

3. Mécanisme selon la revendication 1 ou la revendication 2, dans lequel ledit engrenage principal (2) est monté coaxialement audit engrenage d'accouplement (1), tandis que ladite roue menée (5) est positionnée latéralement par rapport à celui-ci.

4. Mécanisme selon la revendication 3, dans lequel ledit engrenage d'accouplement (1) comprend une première partie avec une denture droite adaptée à s'engrener avec une denture correspondante de l'engrenage principal (2), et une deuxième partie avec une denture droite adaptée à s'engrener avec une denture correspondante de la roue menée (5).

5. Mécanisme selon la revendication 3, dans lequel ledit engrenage d'accouplement (1) comprend une première partie avec une denture conique plane adaptée à s'engrener avec une denture correspondante de l'engrenage principal (2), et une deuxième partie avec une denture droite adaptée à s'engrener avec une denture correspondante de la roue menée (5).

6. Mécanisme selon la revendication 2, dans lequel ledit engrenage principal (2) et ladite roue menée (5) sont tous deux positionnés sur le même côté que l'engrenage d'accouplement (1).

7. Mécanisme selon l'une quelconque des revendications précédentes, comprenant en outre un moyen pour garder un angle de phase correct entre l'engrenage principal (2) et l'engrenage d'accouplement (1).

8. Mécanisme selon la revendication 7, dans lequel ledit moyen pour garder un angle de phase correct consiste en une tige axiale, fixée audit engrenage principal (2) ou audit engrenage d'accouplement (1), et en un trou correspondant ménagé dans l'autre des deux éléments.

9. Mécanisme selon l'une quelconque des revendications 2 à 8, dans lequel ledit actionneur (4) consiste en une unité cylindre/piston, dans lequel le piston est un rebord circulaire (3b) faisant saillie radialement depuis le moyeu (3) de l'engrenage d'accouplement (1), et le cylindre est formé par les parois cylindriques (7a) d'une chambre de pression (7), qui ont un diamètre complémentaire de celui du rebord (3b) et sont coaxiales audit moyeu (3).

10. Mécanisme selon la revendication 9, dans lequel ladite unité cylindre/piston opère à l'encontre de ressorts de pression (8).

11. Mécanisme selon la revendication 9 ou 10, dans lequel ledit actionneur (4) est un actionneur à double effet.

12. Mécanisme selon l'une quelconque des revendications 2 à 8, dans lequel ledit actionneur (4) est du type électromagnétique.

13. Mécanisme selon l'une quelconque des revendications précédentes, dans lequel deux codeurs sont prévus pour lire l'angle de phase entre la position angulaire de l'engrenage principal (2) et la position angulaire de la roue menée (5).

14. Mécanisme selon l'une quelconque des revendications précédentes, dans lequel un frein est en outre prévu pour agir sur le moteur auxiliaire (m), ou sur une chaîne cinématique reliée à celui-ci.

15. Mécanisme selon l'une quelconque des revendications précédentes, dans lequel le moteur auxiliaire (m) est un moteur à vitesse variable.
